# FASCICULE DE BREVET EUROPEEN

(11) **EP 3 997 174 B1**
(45) Date de publication et mention de la délivrance du brevet: **16.10.2024**
(21) Numéro de dépôt: 20736734.3
(22) Date de dépôt: 10.07.2020
(51) Int. Cl.: C08L 67/02, C08L 67/04

(54) **MATIERE PLASTIQUE À HAUTE TENEUR EN PLA COMPRENANT DU PPGDGE**
PLA-REICHES KUNSTSTOFFMATERIAL MIT PPGDGE
HIGH PLA CONTENT PLASTIC MATERIAL COMPRISING PPGDGE

(30) Priorité: 10.07.2019 FR 1907729
(43) Date de publication de la demande: 18.05.2022
(73) Titulaire: Carbiolice, 63100 Clermont-Ferrand (FR)
(72) Inventeur: ARNAULT, Clémentine, 63100 CLERMONT FERRAND (FR); DE BACKER, Bertrand, 7000 MONS (BE); CAYUELA, Julien, 59880 SAINT-SAULVE (FR); DUBOIS, Philippe, 4260 CIPLET (BE)
(74) Mandataire: Icosa
(86) Numéro de dépôt international: PCT/EP2020/069540
(87) Numéro de publication internationale: WO 2021/005205

(56) Documents cités:
- EP-B1- 2 844 685
- WO-A1-2018/056539
- US-B2- 7 807 773

## Description

### DOMAINE DE L'INVENTION

La présente invention concerne une composition de matière plastique à base de polyesters biodégradables et biosourcés, en particulier pour la préparation de films de matière plastique.

### ETAT DE LA TECHNIQUE

On connaît des films biosourcés et biodégradables, à base d'amidons ou de dérivés d'amidons et de polyesters, notamment des films monocouches ou multicouches, employés en particulier pour la fabrication de sacs de matière plastique. Ces sacs sont notamment employés pour l'emballage de produits alimentaires, en particulier les fruits et légumes.

On citera notamment les films décrits dans les brevets et demandes de brevets US 6,841,597, US 5,436,078, WO 2007/118828, WO 2002/059202, WO 2002/059199, WO 2002/059198, US 9,096,758, WO 2004/052646 et CN 106881929. Les matériaux biosourcés et/ou biodégradables employés pour conserver les propriétés mécaniques adaptées à leur utilisation restent onéreux.

L'augmentation de la teneur en PLA (acide polylactique) permet d'augmenter la teneur en matériaux biosourcés moins onéreux, comme par exemple dans des compositions de résines biodégradables (WO 2018/056539, US 7 807 773) ou de copolymères blocs (EP 2 844 685). Cette augmentation de la teneur en PLA nécessite généralement d'employer un agent compatibilisant pour permettre le mélange du PLA avec un autre polyester, comme le PBAT (polybutylène adipate téréphthalate). De tels compatibilisants sont connus pour cet usage, notamment les polyacrylates, comme les produits commercialisés sous les dénominations Joncryl^{®} ADR (Dong & al., International Journal of Molecular Sciences, 2013, 14, 20189-20203 ; Ojijo & al., Polymer 2015, 80, 1-17; EP 1 699 872; EP 2 258 775; EP 2 679 633; WO 2013/164743; WO 2015/057694).

Toutefois, l'augmentation de la teneur en PLA se fait au détriment des propriétés mécaniques des produits préparés avec ces compositions polymères. Ainsi, les films obtenus avec de telles compositions à forte teneur en PLA et malgré l'ajout d'agent compatibilisant ont des propriétés mécaniques diminuées par rapport à des films avec moins de PLA, notamment en termes d'allongement à la rupture et de résistance au déchirement. De fait, augmenter la teneur en PLA dans les compositions de l'état de la technique ne permet pas de répondre au cahier des charges de la sacherie.

L'invention vient résoudre ce problème technique en choisissant un compatibilisant particulier à ajouter au mélange de polyesters.

### EXPOSE DE L'INVENTION

L'invention concerne une composition de matière plastique qui comprend
a. au moins 20% en poids de PLA (acide polylactique),
b. au moins 45 % en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges, et
c. du Poly (Propylene Glycol) DiGlycidyl Éther (PPGDGE) comme compatibilisant PLA/Polyester.

L'invention concerne aussi un film de matière plastique souple dont la composition comprend une composition selon l'invention, notamment obtenu par extrusion d'une composition selon l'invention.

L'invention concerne enfin un procédé de préparation d'une composition selon l'invention qui comprend au moins les étapes successives de mélange et de fusion avec
1. Le PLA et le compatibilisant, puis
2. Le polyester choisi parmi le PBAT (polybutylène adipate téréphthalate), les PHAs (polyhydroxyalkanoates), le PBS (polybutylène succinate), le PBSA (polybutylène succinate adipate) et leurs mélanges.

### DESCRIPTION DETAILLEE DE L'INVENTION

L'invention concerne une composition de matière plastique qui comprend
a. au moins 20% en poids de PLA (acide polylactique),
b. au moins 45 % en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges
c. du Poly (Propylene Glycol) DiGlycidyl Éther (PPGDGE) compatibilisant PLA/Polyester, et le cas échéant
d. un plastifiant en particulier choisi parmi les oligomères d'acide lactique (OLAs) et les esters de citrate.

Sauf indication contraire, les pourcentages sont donnés en poids par rapport au poids total de la composition à laquelle ils se réfèrent.

Les constituants de la composition selon l'invention sont bien connus de l'homme du métier, notamment décrits dans les publications, brevets et demandes de brevets cités plus haut, en particulier les polyesters et le PLA couramment employés dans l'industrie des matières plastiques biodégradables et/ou biosourcées, notamment pour la préparation de films biosourcés et biodégradables.

Le PLA est formé à partir de monomères d'acide lactique lévogyres (L) et/ou de monomères dextrogyres (D), le taux de monomères (L) et (D) pouvant être variable. Le PLA peut être un mélange de PLA lévogyre (PLLA), qui est formé à partir de monomères majoritairement (L), et de PLA dextrogyre (PDLA), qui est formé à partir de monomères majoritairement (D).

De manière avantageuse, le polyester b) est du PBAT. Lorsqu'il est employé en mélange avec d'autres polyesters comme les PHAs, le PBS ou le PBSA, le PBAT est en proportion majoritaire dans le mélange de polyesters autres que le PLA, de préférence plus de 60% du mélange, plus préférentiellement plus de 70 % encore plus préférentiellement plus de 80% en poids. Selon un mode particulier et préféré de réalisation de l'invention, le polyester b) autre que le PLA est essentiellement du PBAT, plus préférentiellement est constitué du seul PBAT.

Les Poly (Propylene Glycol) DiGlycidyl Éther (PPGDGE) sont également appelés éthers de glycidyls, décrits notamment comme « plastifiants réactifs » dans la demande de brevet WO 2013/104743, employés pour la préparation de copolymères blocs avec du PLA et du PBAT. Ils sont également identifiés comme résine époxy liquide, de la société DOW, commercialisée sous la référence « D.E.R.^{™} 732P », ou encore comme résine époxy aliphatique, de la société HEXION, commercialisée sous la référence « Epikote^{™} Resin 877 ».

La composition selon l'invention peut comprendre de manière optionnelle d'autres compatibilisants PLA/Polyesters associés au PPGDGE. De tels compatibilisants PLA/Polyesters sont bien connus de l'homme du métier, notamment choisis parmi les polyacrylates, les terpolymères d'éthylène, d'ester acrylique et de méthacrylate de glycidyle (par exemple commercialisé sous la marque Lotader^{®} par la société Arkema), les copolymères triblocs PLA-PBAT-PLA, les PLA greffés d'anhydride maléique (PLA-g-AM) ou les PBAT greffés d'anhydride maléique (PBAT-g-AM), en particulier du poly(éthylène-co-méthyl acrylate-co-glycidyl méthacrylate) décrits notamment par Dong & al. (International Journal of Molecular Sciences, 2013, 14, 20189-20203) et Ojijo & al. (Polymer 2015, 80, 1-17), plus particulièrement commercialisés sous la dénomination JONCRYL^{®} par la société BASF, préférentiellement le grade ADR 4468.

De préférence, la composition selon l'invention comprend au moins 25 % de PLA, plus préférentiellement au moins 28% de PLA, encore plus préférentiellement au moins 30 % de PLA. Le compatibilisant PPGDGE permet d'obtenir des teneurs en PLA jusqu'à au moins 35%, voire au moins 40%, jusqu'à environ 50% de PLA.

La teneur en polyester b) est avantageusement d'au moins 50% du poids total de la composition. Selon un mode avantageux de réalisation de l'invention, la teneur en polyester b) est comprise entre 60 et 70%.

La teneur en PPGDGE comme compatibilisant c) dans la composition selon l'invention est avantageusement d'au moins 0,1%, de préférence de 0,5 à 2%, plus préférentiellement de 0,5 à 1,5%, avantageusement d'environ 1% en poids par rapport au poids total de la composition.

Si d'autres compatibilisants sont associés au PPGDGE, la teneur en compatibilisants autres que le PPGDGE sera comprise entre 0,2 et 2%.

La composition selon l'invention peut comprendre également des plastifiants. Ces plastifiants sont bien connus de l'homme du métier, comme par exemple les oligomères d'acide lactique (OLAs) ou les esters de citrate.

Les OLAs sont également des plastifiants connus de l'homme du métier, en particulier comme matériaux biosourcés. Il s'agit d'oligomères d'acide lactique de poids moléculaire inférieur à 1500 g/mol. Ils sont de préférence des esters d'oligomères d'acides lactiques, leur terminaison acide carboxylique étant bloquée par estérification avec un alcool, en particulier un alcool linéaire ou ramifié en C1-C10, avantageusement un alcool en C6-C10, ou un mélange de ces derniers. On citera notamment les OLAs décrits dans la demande de brevet EP 2 256 149 avec leur mode de préparation, et les OLAs commercialisés par la société Condensia Quimica, en particulier les références Glyplast^{®} OLA 2, qui a un poids moléculaire de 500 à 600 g/mol et Glyplast^{®} OLA 8 qui a un poids moléculaire de 1000 à 1100 g/mol. Selon un mode préféré de réalisation de l'invention, les OLAs ont un poids moléculaire d'au moins 900 g/mol, de préférence de 1000 à 1400 g/mol, plus préférentiellement de 1000 à 1100 g/mol. Le poids moléculaire des OLAs peut être mesuré par chromatographie d'exclusion stérique (CES) ou spectrométrie de masse couplant une source d'ionisation de désorption-ionisation laser assistée par matrice et un analyseur à temps de vol (MALDI-TOF) selon les méthodes usuelles de mesure de poids moléculaire de ces oligomères.

Les esters de citrate sont également des plastifiants connus de l'homme du métier, en particulier comme matériaux biosourcés. On citera notamment le triéthyl citrate (TEC), le triéthyl acétyl citrate (TEAC), le tributyl citrate (TBC), le tributyl acétyl citrate (TBAC), de préférence le TBAC.

La teneur en plastifiant, en particulier OLAs ou esters de citrate dans la composition selon l'invention est avantageusement d'au moins 0,5 %, de préférence de 1 à 5%, plus préférentiellement de 2 à 4%, avantageusement d'environ 2,5%.

La composition selon l'invention peut comprendre d'autres additifs usuels entrant dans la composition de matières plastiques, en particulier pour la préparation de films, comme des charges minérales ou organiques, des fibres naturelles, des pigments ou des colorants, etc. Dans un exemple particulier, la composition selon l'invention peut comprendre du carbonate de calcium, en particulier jusqu'à 5% de carbonate de calcium.

Dans un cas particulier, la composition selon l'invention comprend par rapport au poids total de la composition
a. au moins 25% en poids de PLA (acide polylactique), préférentiellement au moins 28%, plus préférentiellement au moins 30 % de PLA,
b. au moins 60 % en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges, en particulier le PBAT,
c. de 0,5 à 1,5% en poids de PPGDGE, et
d. de 0 à 2% en poids d'un autre compatibilisant, plus préférentiellement de la famille des polyacrylates
d. de 0 à 4% en poids d'un plastifiant.

En particulier la composition selon l'invention comprend
a. de 30 à 40% en poids de PLA (acide polylactique),
b. de 60 à 67% en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges, en particulier le PBAT,
c. de 0,5 à 1,5% en poids de PPGDGE,
d. de 0 à 4% en poids d'un plastifiant, en particulier de 2 à 4%, et
e. de 0 à 2% en poids d'un autre compatibilisant, plus préférentiellement de la famille des polyacrylates
f. de 0 à 5% en poids de carbonate de calcium.

Une composition particulière selon l'invention comprend
a. 25 à 35 % en poids de PLA (acide polylactique),
b. 69% en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges, en particulier le PBAT,
c. 1% en poids de PPGDGE.

La composition selon l'invention peut également comprendre des enzymes capables de dégrader les polyesters de manière à améliorer la biodégradabilité du film selon l'invention. Dans un mode particulier, la composition selon l'invention peut comprendre des enzymes capables de dégrader le PLA. De telles enzymes et leur mode d'incorporation dans les films thermoplastiques sont connus de l'homme du métier, notamment décrits dans les demandes de brevets WO 2013/093355, WO 2016/198652, WO 2016/198650, WO 2016/146540 et WO 2016/062695. Préférentiellement ces enzymes sont choisies parmi des protéases et sérines protéases. Dans un mode particulier, les sérines protéases sont choisies parmi la Proteinase K de *Tritirachium album,* ou les enzymes dégradant le PLA issues *d'Amycolatopsis sp., Actinomadura keratinilytica, Laceyella sacchari LP175, Thermus sp.,* ou Bacillus licheniformis ou d'enzymes commerciales reformulées et connues pour dégrader le PLA telles que Savinase^{®}, Esperase^{®}, Everlase^{®} ou n'importe quelle enzyme de la famille des subtilisines CAS 9014-01-1 ou tout variant fonctionnel.

Lorsque la composition selon l'invention comprend également des enzymes dégradant les polyesters, en particulier dégradant le PLA, la composition complémentée d'enzymes est avantageusement la suivante :
De 80% à 98% en poids, préférentiellement de 90% à 98% en poids, de la composition riche en PLA précédemment définie et

De 2 à 20%, préférentiellement de 2% à 10%, d'une composition enzymatique comprenant de 0,0005 à 10% d'enzyme associée à 50 à 95% d'un polymère de bas point de fusion et éventuellement associée à un stabilisant. Ce stabilisant peut être choisi parmi les polysaccharides, préférentiellement parmi les gommes naturelles comme la gomme arabique.

Ladite composition enzymatique peut être préparée via l'extrusion de 50 à 95%, préférentiellement de 70 à 90%, d'un polymère à bas point de fusion et de 5 à 50%, préférentiellement de 10 à 30%, d'une formulation enzymatique liquide comprenant de 0,01 à 35% d'enzymes, de 19 à 60% d'eau et de 15 à 70% de stabilisant.

De telles compositions enzymatiques et/ou formulations enzymatiques liquides appropriées pour la préparation de mélanges polymères riches en PLA sont notamment décrites dans la demande WO 2019/043134.

Une composition enzymatique préférée comprend en particulier, de 50 à 95 % d'un polymère de bas point de fusion, en particulier du polycaprolactone (PCL), préférentiellement de 70 à 90 %, de 0,001 à 10% d'enzymes, préférentiellement de 1 à 6%, et de 1,5 à 21% de gomme arabique, préférentiellement de 3 à 7%.

La composition complémentée d'enzymes selon l'invention comprendra avantageusement
au moins 20% de PLA, avantageusement au moins 25% de PLA,
au moins 40% de PBAT,
au moins 0,08% de compatibilisant PLA/PBAT, avantageusement au moins 0,5 %,
au moins 0,4 % de plastifiant,
au moins 0,002 % d'enzyme, avantageusement au moins 0,05% et
au moins 1,4% d'un polymère à bas point de fusion, avantageusement au moins 1,5%.

L'homme du métier saura adapter la teneur en enzymes, et par conséquent la teneur en polymère à bas point de fusion et autres additifs apportés par la composition enzymatique en fonction de ses objectifs de vitesse de dégradation des PLA par les enzymes.

L'invention concerne également un procédé de préparation de compositions selon l'invention, avec les composés décrits précédemment, avec leurs proportions, comprenant les étapes de
1. mélanger le PLA et le compatibilisant à une température où le PLA est partiellement ou totalement fondu, puis
2. ajouter du polyester choisi parmi le PBAT (polybutylène adipate téréphthalate), les PHAs (polyhydroxyalkanoates), le PBS (polybutylène succinate), le PBSA (polybutylène succinate adipate) et leurs mélanges à une température où le mélange préalablement obtenu est fondu.

Le plastifiant peut être ajouté à tout moment du procédé : au moment de l'étape 1 en même temps que le PLA et le comptabilisant, entre l'étape 1 et l'étape 2, au moment de l'étape 2 ou après l'étape 2.

Dans un cas particulier, l'invention concerne un procédé de préparation d'une composition selon l'invention comprenant les étapes de
1. mélanger au moins 25% en poids (par rapport au poids total de la composition de l'invention) de PLA et entre 0,5% et 1,5% en poids de compatibilisant à une température supérieure ou égale à 120°C, puis
2. ajouter au moins 60% du polyester choisi parmi le PBAT (polybutylène adipate téréphthalate), les PHAs (polyhydroxyalkanoates), le PBS (polybutylène succinate), le PBSA (polybutylène succinate adipate) et leurs mélanges à une température où le mélange préalablement obtenu est fondu,

l'ajout du plastifiant choisi parmi les OLAs ou les esters de citrate pouvant être réalisé à tout moment du procédé

La préparation de la composition se fait selon les méthodes usuelles de la technique, en particulier par extrusion. Le mélange fondu extrudé est ensuite refroidi pour former des granules puis est généralement transformé en un article final de forme particulière (films, pièces souples ou solides).

Lorsque les articles préparés avec la composition selon l'invention comprennent également des enzymes dégradant les polyesters telles que définis ci-dessus, ces dernières sont ajoutées soit au moment de la préparation de la composition, soit au moment de la préparation des articles finaux en mélangeant des granulés de composition selon l'invention, et les enzymes sous une forme appropriée à leur incorporation et selon les méthodes usuelles connues de l'homme du métier.

Pour faciliter l'incorporation des enzymes à la composition selon l'invention, on emploiera avantageusement ces dernières sous forme d'une composition adaptée, qui permet à la fois la conservation et le transport des enzymes, mais également favorise leur incorporation en prévenant leur dégradation au cours de cette étape d'incorporation. De telles compositions sont connues de l'homme du métier, et notamment décrites dans la demande WO 2019/043134.

En particulier, l'ajout d'enzymes à la composition selon l'invention peut se faire avantageusement comme suit : mélange entre 80% et 98% d'une composition selon l'invention, avec entre 2% et 20% d'une composition comprenant une enzyme dégradant le polyester et en particulier le PLA, les pourcentages étant donnés en poids par rapport au poids de la composition finale.

L'invention concerne aussi tout article de matière plastique constitué ou comprenant des éléments constitués de la composition selon l'invention.

Selon un premier mode de réalisation, la composition est sous forme de granulés préparés selon les techniques usuelles. Ces granulés pourront être stockés, transportés, comme granulés entrant dans la fabrication de produits en matière plastique, quelque soit leur forme et leur utilisation, que l'on peut appeler « articles finaux ». Il peut s'agir de films, ou de pièces souples ou solides de formes et volumes adaptés à leurs usages.

Les méthodes de préparation de ces articles finaux sont bien connues de l'homme du métier, comprenant en particulier les techniques usuelles de la plasturgie telles que l'extrusion-gonflage, l'extrusion soufflage, l'extrusion de film coulé, le calandrage et le thermoformage, le moulage par injection, le moulage par compression, le rotomoulage, le revêtement, la stratification, l'expansion, la pultrusion, compression-granulation. De telles opérations sont bien connues de l'homme du métier, qui adaptera facilement les conditions du procédé en fonction du type d'articles en matière plastique prévu (par exemple température, temps de séjour, etc.).

La composition selon l'invention est particulièrement adaptée pour la réalisation de films plastiques. Les films selon l'invention peuvent être produits selon les méthodes usuelles de la technique, en particulier par extrusion-gonflage. Les films peuvent être préparés directement en sortie de filière d'extrusion employée pour la préparation de la composition selon l'invention, ou encore à partir de granulés de composition selon l'invention qui sont fondus selon les techniques usuelles, en particulier par extrusion.

L'invention concerne donc également un film de composition telle que définie précédemment, avec ou sans enzymes. Les films selon l'invention peuvent être des films monocouches ou multicouches. Dans le cas d'un film multicouche, au moins une des couches est de composition telle que définie précédemment.

En particulier le film multicouche peut être un film comprenant au moins 3 couches, de type ABA, ABCA ou ACBCA, les couches A, B et C étant de compositions différentes. Généralement les couches A et B comprennent du PLA et/ou un polyester, avantageusement d'une composition selon l'invention.

Les couches C, si présentes, sont là pour apporter des propriétés particulières aux articles selon l'invention, plus particulièrement pour apporter des propriétés barrière aux gaz et notamment à l'oxygène. De tels matériaux barrières sont bien connus de l'homme du métier, et notamment le PVOH (alcool polyvinylique), le PVCD (polychlorure de vinyle), le PGA (acide polyglycolique), la cellulose et ses dérivés, les protéines de lait, ou des polysaccharides et leurs mélanges en toutes proportions.

La composition selon l'invention est particulièrement adaptée pour être associée avec des enzymes dégradant les polyesters pour la fabrication de films plastiques biodégradables.

Dans le cas de films multicouches tels que définis plus haut, et en particulier de films de type ABA, ABCA ou ACBCA, les enzymes peuvent être présents dans toutes les couches ou bien dans une seule des couches, par exemple dans les couches A et B ou seulement dans les couches A ou dans la couche B.

Selon un mode particulier de réalisation de l'invention, les deux couches A sont constituées d'une composition selon l'invention comprenant le PLA, le polyester et le PPGDGE telle que définie plus haut, sans enzymes. Les enzymes sont dans la couche B, soit dans une composition selon l'invention avec enzymes telle que définie plus haut, soit dans une composition particulière en particulier une composition d'enzyme dans un polymère à bas point de fusion définie plus haut.

Les films plastiques, en particulier les films monocouches et les films multicouches, de compositions telles que définie précédemment, ont à la fois une forte teneur en PLA et conservent des propriétés mécaniques telles que recherchées pour la préparation de sacs biodégradables et biosourcés, notamment pour les films de paillage, le conditionnement, l'emballage de produits non alimentaires et de produits alimentaires, notamment pour l'emballage de produits alimentaires.

A cet effet, les constituants de la composition selon l'invention seront préférentiellement choisis parmi les produits compatibles avec un usage alimentaire.

Les films selon l'invention ont avantageusement une épaisseur inférieure à 100 µm, plus avantageusement inférieure à 50 µm, 40 µm ou 30 µm, préférentiellement inférieure à 20 µm, plus préférentiellement de 6 à 20 µm, notamment 10 µm.

Les films plastiques obtenus avec la composition selon l'invention ont avantageusement des propriétés suivantes,
- un allongement à la rupture supérieur à 120%, en sens longitudinal et supérieur à 180 en sens transversal, mesuré selon la norme EN ISO 527-3, et/ou
- une résistance à la déchirure supérieure à 20 N/mm dans le sens transversal du film, mesurée selon la norme EN ISO 6383-1, notamment supérieure à 30 N/mm et ce tout en ayant une forte teneur en PLA.

L'allongement à la rupture du film plastique obtenu avec la composition selon l'invention est avantageusement d'au moins 120% en sens longitudinal, de préférence d'au moins 180%.

La résistance à la déchirure du film plastique obtenu avec la composition selon l'invention est avantageusement d'au moins 18 N/mm dans le sens transversal du film, de préférence d'au moins 20 N/mm, notamment d'au moins 35 N/mm

Dans un mode particulier, les films plastiques obtenus avec la composition selon l'invention ont également les propriétés suivantes,
1. un module élastique supérieur à 700 MPa en sens longitudinal et supérieur à 210 MPa en sens transversal, mesuré selon la norme EN ISO 527-3 et/ou
2. une contrainte maximum supérieure à 20 MPa en sens longitudinal et supérieur à 13 MPa en sens transversal, mesurée selon la norme EN ISO 527-3

La composition selon l'invention peut également être utilisée pour la réalisation de produits plastiques rigides tels que des emballages alimentaires.

### EXEMPLES

### Exemple 1

### Matières utilisées :

Le Poly-L-lactide (PLA) utilisé est le grade PLA 4032D vendu par NatureWorks. Sa masse molaire moyenne en nombre est d'environ 111 000 g/mol (équivalent PS) et sa dispersité est de 2,06.

Le poly (butylène adipate-co-téréphtalate) (PBAT) utilisé est le grade Solpol 1000N vendu par GioSoltech, de masse molaire moyenne en nombre environ de 46 000 g/mol (équivalent PS) et de dispersité de 3,17. Sa microstructure chimique déterminée par analyse RMN ¹H fait apparaître des pourcentages molaires de séquences butylène adipate et de séquences butylène téréphtalate respectivement de 51,2% et 48,8%.

Le poly(propylène glycol)diglycidyl éther utilisé est vendu par Sigma Aldrich. Il a une masse molaire moyenne en nombre de 640 g/mol (donnée du fournisseur).

### Préparation des compounds :

Les essais ont été conduits dans une extrudeuse bi-vis corotative de marque Leistritz, avec un diamètre du fourreau D de 18 mm et un rapport L/D de 50. L'extrudeuse comprend 10 zones de chauffage indépendantes. La vitesse de rotation des vis est de 120 tours/min. Les températures de consigne des fourreaux (de 1 à 10) sont reportées dans le tableau 1. La température de la filière est de 190 °C.

**[Tableaux 1]**

| Zone | 1 | 2 | 3 | 4 | 5 | 6 | 7 | 8 | 9 | 10 |
|---|---|---|---|---|---|---|---|---|---|---|
| Température | 3 | 195 | 195 | 195 | 195 | 195 | 90 | 90 | 90 | 90 |

Le PLA et le PBAT ont été séchés dans une étuve ventilée à 60 °C avant d'être extrudés.

Le PLA et le PBAT sont introduits dans le fourreau 1 selon des débits respectifs de 0,36 kg/h et 0,83 kg/h, en utilisant des feeders à granulés indépendants. Le PPGDGE est introduit dans le fourreau 4, selon un débit de 12,0 g/h, en utilisant une pompe à piston.

Le jonc extrudé est refroidi dans un bain d'eau puis granulé.

Deux compounds ont été produits. Le premier de composition 30% PLA 4032D + 70% PBAT Solpol 1000N et servant de compound témoin. Ce compound est référencé C réf. Le second de composition 99,0% (30% PLA 4032D + 70% PBAT Solpol 1000N) + 1,0% PPGDGE. Ce compound est référencé C.

Les compounds ont été, dans un second temps, introduits dans une extrudeuse mono-vis équipé d'un dispositif de soufflage de gaine. Le film produit à partir du compound C réf est référencé F réf. Le film produit à partir du compound C est référencé F.

### Mesures et tests utilisés :

### Microscopie Electronique à Balayage (MEB) sur les compounds produits

### Préparation des échantillons

Un jonc du compound est cryofracturé puis recouvert d'une couche de carbone sur la zone de fracture afin de rendre l'échantillon conducteur.

### Mesures

Les observations sont réalisées sur un appareil MEB-FEG Hitachi SU8020. La tension d'accélération est de 5 kV. Le détecteur d'électrons secondaires est utilisé.

### DSC (calorimétrie différentielle à balayage) sur les films produits par extrusion-gonflage

Les températures de fusion (Tf) et de cristallisation (Tc), les enthalpies de fusion (□Hf) et de cristallisation (□Hc), les températures de transition vitreuse (Tg) et les variations de capacité calorifique (□Cp) des polymères sont mesurées au moyen d'un calorimètre différentiel (° differential scanning calorimeter ") TA Instrument (DSC Q200). Les conditions opératoires sont les suivantes : isotherme à -80 °C pendant 5 min, 1^{er} chauffage de - 80 °C à 195 °C (10 °C/min), isotherme pendant 2 min, refroidissement de 195 °C à - 80 °C (10 °C/min), isotherme pendant 5 min, 2^{ème} chauffage de - 80 °C à 195 °C (10 °C/min).

Les températures de fusion et de cristallisation sont déterminées en prenant les températures au pic des endothermes et des exothermes. Les températures de transition vitreuse sont déterminées en considérant le point d'inflexion.

Les cristallinités du PBAT et du PLA sont déterminées en considérant une enthalpie de 114 J/g pour un PBAT 100 % cristallin et une enthalpie de 93 J/g pour un PLA 100% cristallin.

### Tests de déchirement sur les films produits par extrusion-gonflage

Les films ont été caractérisés mécaniquement en déchirure, dans le sens longitudinal (MD) et dans le sens transversal (TD), à l'aide d'une machine d'essai Lloyd LS5 équipé d'un capteur de 20 N et en utilisant la norme EN ISO 6383-1. Les conditions expérimentales sont résumées dans le tableau 2.

**[Tableaux 2]**

| Test | Dimensions de l'échantillon (mm*mm) | Ecartement entre mâchoires (mm) | Vitesse de la traverse (mm/min) |
|---|---|---|---|
| Déchirement | 50*150 | 75 | 200 |

### Tests de traction sur les films produits par extrusion-gonflage

### Préparation des éprouvettes

Les éprouvettes de traction sont obtenues en découpant des rectangles (150 mm x 15 mm) dans les films. Le découpage est réalisé à l'aide d'une presse sur laquelle est montée un couteau de découpe. Le découpage a lieu dans le sens longitudinal et dans le sens transversal.

### Test de traction

Le Module d'Young (MPa), la contrainte à la rupture (MPa) et l'allongement à la rupture (%) sont mesurés par des essais de traction sur une machine Lloyd LR10k. Toutes les mesures sont réalisées dans des conditions normales de température (23 ± 2 °C) et d'hygrométrie (50 ± 5 % d'humidité relative). L'écartement entre les mors est fixé à 80 mm. Les mesures sont réalisées à une vitesse de 100 mm/min. La déformation est mesurée en suivant le déplacement de la traverse. Le Module d'Young est mesuré en considérant la pente au début du graphe.

### Résultats :

### MEB sur les compounds

Les images obtenues au MEB montrent des domaines de PLA dispersés dans la matrice PBAT. La taille des domaines de PLA est réduite dans le compound C comparativement au compound C réf. Cette meilleure dispersion et homogénéité est le signe que le PPGDGE joue un rôle de compatibilisant dans le compound C.

### DSC sur les films

Les résultats de DSC montrent deux Tg pour les films produits (tableau 4) : une à basse température, proche de - 30 °C et équivalente à celle du PBAT pur ; une à plus haute température, proche de 60 °C et équivalente à celle du PLA pur. L'observation de ces 2 Tg témoigne de l'immiscibilité du PLA et du PBAT et confirme le résultat des observations au MEB, à savoir la présence d'une phase dispersée de PLA dans du PBAT.

Les résultats de DSC montrent que les matériaux issus de l'invention diffèrent dans leurs propriétés de ceux du brevet EP 2 844 685 B1. En effet, dans ce dernier, les matériaux sont amorphes et monophasiques (une seule Tg observée).

### Déchirement sur les films

Les résultats de déchirement sur les films sont donnés dans le tableau 3.

**[Tableaux 3]**

| | | Sens testé | Résistance au déchirement (N/mm) |
|---|---|---|---|
| | F réf | MD | 42,6 (-16,2 ; +12,4) |
| | | TD | 32,8 (-12,3 +18,7) |
| | F | MD | 56,4 (-28,6 ; +13,0) |
| | | TD | 62,7 (-4,8 ; +6,6) |

Les résultats de déchirement sur les films montrent une meilleure résistance au déchirement pour le film contenant du PPGDGE. Ils témoignent une nouvelle fois de l'effet compatibilisant du PPGDGE.

La propriété discriminante du film pour répondre au cahier des charges de la sacherie est la résistance à la déchirure. Le cahier des charges de la sacherie demande que les films atteignent la valeur suivante : résistance à la déchirure de 30 N/mm en sens transversal selon les conditions de la norme DIN EN ISO 6383-1 à 200 mm/min. En conséquence, les valeurs obtenues montrent que les cibles du cahier des charges sont atteintes dans le cas du film issu de l'invention.

### Traction des films

Les résultats de traction sur les films sont donnés dans le tableau 4.

**[Tableaux 4]**

| | Sens testé | Module d'Young (MPa) | Contrainte à la rupture (MPa) | Allongement à la rupture (%) |
|---|---|---|---|---|
| F réf | MD | 283 (69) | 12,1 (3,5) | 29 (25,0) |
| | TD | 287 (111) | 10,6 (5,6) | 69 (48) |
| F | MD | 233 (21) | 13,3 (0,8) | 33 (5) |
| | TD | 213 (27) | 9,3 (1,5) | 60 (32) |

Les valeurs des résultats de traction du film F sont moins dispersées que celles du film F réf. La présence du PPGDGE améliore donc l'homogénéité du matériau.

L'amélioration de la dispersion du PLA dans le PBAT, de la résistance au déchirement, et de l'homogénéité des résultats de traction, dans le film contenant du PPGDGE, pourraient être la conséquence de réactions de couplage de chaînes entre le PLA et le PBAT, initiées par le PPGDGE.

### Exemple 2 :

### Production des compounds

Les granulés ont été produits sur bi-vis co-rotative Clextral Evolum 25 HT. Pour introduire les polymères (PLA Ingeo 4043D de Natureworks et PBAT A400 de Kingfa) un doseur gravimétrique a été utilisé et pour doser le PPGDGE liquide de référence DER^{™} 732P EPOXY RESIN et commercialisé par Olin, une pompe PCM a été utilisée.

Le mélange PLA et PBAT a été introduit via un doseur en début de vis. Le mélange est fondu et amené dans la zone d'introduction du PPGDGE.

Les granulés ont été préparés dans les mêmes conditions, avec une vitesse de vis de 650 tpm et à un débit de 40 kg/h.

Les paramètres utilisés pour l'extrusion des granulés sont présentés dans le tableau 5.

**[Tableaux 5]**

| Zone | Z1 | Z2 | Z3 | Z4 | Z5 | Z6 | Z7 | Z8 | Z9 | Z10 | Z11 |
|---|---|---|---|---|---|---|---|---|---|---|---|
| Température | 50 | 195 | 195 | 195 | 195 | 195 | 195 | 195 | 195 | 195 | 195 |

Le mélange des composants arrive à l'état fondu dans la dernière zone de la bivis (Z11) et est immédiatement granulé avec un système de coupe sous eau pour obtenir des granulés en demi-lune de diamètre inférieur à 3 mm.

On prépare quatre compositions, une composition 1 correspondant à l'état de la technique comprenant 30% de PLA et 70% de PBAT, une composition 2 selon l'invention comprenant 30% de PLA, 69,5% de PBAT et 0,5% de PPGDGE, une composition 3 selon l'invention comprenant 30% de PLA, 69% de PBAT et 1% de PPGDGE, et une composition 4 selon l'invention comprenant 30% de PLA, 68,5% de PBAT et 1,5% de PPGDGE (% en poids par rapport au poids total de la composition).

### Production du film avec les compositions décrites dans A)

Les compositions 1 à 4 préparées dans A) ont été utilisées pour la préparation de films. Pour l'extrusion gonflage, une ligne de laboratoire Labtech LF-250, laize 20mm, vis de 30 L/D type LBE20-30/C a été utilisée. La vitesse de vis était de 60 tpm. Le taux de gonflage était d'environ 5.

Les réglages des températures d'extrusion gonflage sont détaillées dans le tableau 6.

**[Tableaux 6]**

| Zone | Z1 | Z2 | Z3 | Z4 | Filière #1 | Filière #2 |
|---|---|---|---|---|---|---|
| Température (°C) | 160 | 160 | 160 | 160 | 155 | 160 |

Les films 1, 2, 3 et 4 de compositions 1, 2, 3 et 4 ont une épaisseur moyenne de 15µm. Les épaisseurs ont été mesurées avec un micromètre.

Ces films sont transparents, sans rugosité et aucun défaut passant n'a été identifié. Pour chaque gonflage, la bulle était stable.

### Caractérisation des propriétés mécaniques en traction simple et en déchirement

Les films ont ensuite été caractérisés mécaniquement en traction simple et en déchirure à l'aide d'une machine d'essai Lloyd LS5 équipé d'un capteur de 20 N et en utilisant les normes EN ISO 527-3 et EN ISO 6383-1 respectivement. Les conditions expérimentales par type d'essai sont résumées dans le tableau 7.

**Tableaux 7]**

| **Test** | **Dimensions de l'échantillon (mm*mm)** | **Ecartement entre mâchoires (mm)** | **Vitesse de la traverse (mm/min)** |
|---|---|---|---|
| Traction simple | 15*150 | 80 | 100 |
| Déchirement | 50* 150 | 75 | 200 |

Les propriétés discriminantes du film pour répondre au cahier des charges de la sacherie sont l'allongement à la rupture et la résistance à la déchirure.

Les caractéristiques d'allongement à la rupture et de déchirement de la composition sont données dans le tableau 8 (MD = Sens Longitudinal, TD = Sens Transversal).

**Tableaux 8]**

| Film | Direction du test | Allongement à la rupture (%) | Résistance à la déchirure (N/mm) |
|---|---|---|---|
| Film 1 | MD | 180 | 18,2 |
| | TD | 167 | 20,2 |
| Film 2 | MD | 148 | 19,8 |
| | TD | 141 | 18,5 |
| Film 3 | MD | 215 | 23 |
| | TD | 183 | 21,3 |
| Film 4 | MD | 221 | 20,7 |
| | TD | 210 | 19 |

On rappelle que le cahier des charges de la sacherie demande que les films atteignent les valeurs suivantes :
L'allongement à la rupture, qui mesure la capacité d'un matériau à s'allonger sous charge avant sa rupture :
120 % en Sens Longitudinal
180 % en Sens Transversal

### Résistance à la déchirure :

Equivalente ou supérieure aux valeurs obtenues pour le film de référence (film 1) soit 18 N/mm dans le sens longitudinal et 20 N/mm dans le sens transversal. selon les conditions de la norme DIN EN ISO 6383-1 à 200 mm/min

Les films 3 et 4 comportant les compositions décrites dans l'invention avec 1% de PPGDGE dans la composition du film 3 et 1,5% de PPGDGE dans la composition du film 4 permettent d'atteindre l'allongement à la rupture ciblée dans le cahier des charges de la sacherie dans les deux sens de mesure. La résistance à la déchirure est améliorée par rapport au film 1 correspondant à la technique. D'une manière générale, les propriétés en allongement à la rupture et en déchirure sont supérieures au film 1 correspondant à l'état de la technique.

L'ajout de 0,5% de PPGDGE dans la formulation ne suffit pas pour atteindre les propriétés recherchées. Les valeurs d'allongement à la rupture et de résistance à la déchirure sont inférieures à celles du film de la technique.

Les caractéristiques de module élastique et de contrainte maximale des films sont données dans le tableau 9.

**[Tableaux 9]**

| Film | Direction du test | Module élastique (MPa) | Contrainte maximale (MPa) |
|---|---|---|---|
| Film 1 | MD | 1040 | 21,7 |
| | TD | 267 | 16,4 |
| Film 2 | MD | 1202 | 27,9 |
| | TD | 336 | 15,6 |
| Film 3 | MD | 1086 | 32 |
| | TD | 261 | 14,8 |
| Film 4 | MD | 1226 | 35,33 |
| | TD | 284 | 19,4 |

On rappelle que le cahier des charges de la sacherie exige que les films atteignent les valeurs suivantes :
Module élastique : 700 MPa en Sens Longitudinal
210 MPa en Sens Transversal
Contrainte maximale : 20 MPa en Sens Longitudinal
13 MPa en Sens Transversal

Tous les films issus de l'invention présentent des propriétés de module élastique et de contrainte maximale demandées par le cahier des charges.

Le module élastique du film 1 dont la composition ne rentre pas dans l'invention est inférieur à celui des films 2, 3 et 4 issus de l'invention.

Le film 1 dont la composition ne rentre pas dans l'invention a une contrainte maximale en sens longitudinal inférieure aux films dont les compositions sont décrites dans l'invention.

### Exemple 3 :

### Production des compounds

Les granulés ont été produits sur bi-vis co-rotative Clextral Evolum 25 HT. Pour introduire les polymères (PLA Ingeo 4043D de Natureworks et PBAT A400 de Kingfa) un doseur gravimétrique a été utilisé et pour doser le PPGDGE liquide de référence DER^{™} 732P EPOXY RESIN et commercialisé par Olin, une pompe PCM a été utilisée.

Le mélange PLA et PBAT a été introduit via un doseur en début de vis en présence du PPGDGE et charge minérale si présente dans la formulation. Le mélange est fondu et amené dans la zone de granulation.

Les granulés ont été préparés dans les mêmes conditions, avec une vitesse de vis de 650 tpm et à un débit de 40 kg/h.

Les paramètres utilisés pour l'extrusion des granulés sont présentés dans le tableau 10.

**Tableaux 10**

| Zone | Z1 | Z2 | Z3 | Z4 | Z5 | Z6 | Z7 | Z8 | Z9 | Z10 | Z11 |
|---|---|---|---|---|---|---|---|---|---|---|---|
| Température | 50 | 195 | 195 | 195 | 195 | 195 | 200 | 200 | 200 | 200 | 200 |

Le mélange des composants arrive à l'état fondu dans dernière zone de la bivis (Z11) et est immédiatement granulé avec un système de coupe sous eau pour obtenir des granulés en demi-lune de diamètre inférieur à 3 mm.

On prépare trois compositions, une composition 5 selon l'invention comprenant 30% de PLA, 69% de PBAT et 1% de PPGDGE, une composition 6 selon l'invention comprenant 35% de PLA, 64% de PBAT et 1% de PPGDGE, et une composition 7 selon l'invention comprenant 35% de PLA, 62% de PBAT, 2% de CaCO3 et 1,5% de PPGDGE (% en poids par rapport au poids total de la composition).

### Production du film avec les compositions décrites dans A)

Les compositions 1 à 4 préparées dans A) ont été utilisées pour la préparation de films. Pour l'extrusion gonflage, une ligne de laboratoire Labtech LF-250, laize 20mm, vis de 30 L/D type LBE20-30/C a été utilisée. La vitesse de vis était de 60 tpm. Le taux de gonflage était d'environ 5.

Les réglages des températures d'extrusion gonflage sont détaillés dans le tableau 11.

**[Tableaux 11]**

| Zone | Z1 | Z2 | Z3 | Z4 | Filière #1 | Filière #2 |
|---|---|---|---|---|---|---|
| Température (°C) | 160 | 160 | 160 | 160 | 155 | 160 |

Le film 5 de composition 5 a une épaisseur moyenne de 15 µm. Le film 6 de composition 6 a une épaisseur moyenne de 15,5 µm. Le film 7 de composition 7 a une épaisseur moyenne de 14,8 µm Les épaisseurs ont été mesurées avec un micromètre.

Ces films sont transparents, sans rugosité et aucun défaut passant n'a été identifié. Pour chaque gonflage, la bulle était stable.

### Caractérisation des propriétés mécaniques en traction simple et en déchirement.

Les films ont ensuite été caractérisés mécaniquement en traction simple et en déchirure à l'aide d'une machine d'essai Lloyd LS5 équipé d'un capteur de 20 N et en utilisant les normes EN ISO 527-3 et EN ISO 6383-1 respectivement. Les conditions expérimentales par type d'essai sont résumées dans le tableau 12.

**[Tableaux 12]**

| Test | Dimensions de l'échantillon (mm*mm) | Ecartement entre mâchoires (mm) | Vitesse de la traverse (mm/min) |
|---|---|---|---|
| Traction simple | 15*150 | 80 | 100 |
| Déchirement | 50*150 | 75 | 200 |

Les propriétés discriminantes du film pour répondre au cahier des charges de la sacherie sont l'allongement à la rupture et la résistance à la déchirure.

Les caractéristiques d'allongement à la rupture et de déchirement de la composition sont données dans le tableau 13.

**[Tableaux 13]**

| Film | Direction du test | Allongement à la rupture (%) | Résistance à la déchirure (N/mm) |
|---|---|---|---|
| Film 5 | MD | 215 | 23 |
| | TD | 183 | 21,3 |
| Film 6 | MD | 147 | 13,6 |
| | TD | 272 | 15,7 |
| Film 7 | MD | 130 | 15,1 |
| | TD | 333 | 15,7 |

On rappelle que le cahier des charges de la sacherie demande que les films atteignent les valeurs suivantes :
L'allongement à la rupture, qui mesure la capacité d'un matériau à s'allonger sous charge avant sa rupture :
120 % en Sens Longitudinal
180 % en Sens Transversal

### Résistance à la déchirure :

Equivalente ou supérieure aux valeurs obtenues pour le film de référence (film 1) soit 18 N/mm dans le sens longitudinal et 20 N/mm dans le sens transversal selon les conditions de la norme DIN EN ISO 6383-1 à 200 mm/min

Les films 5 et 6 comportant les compositions décrites dans l'invention avec 30% de PLA et 1% de PPGDGE dans la composition du film 5 et 35% de PLA et 1% de PPGDGE dans la composition du film 6 permettent d'atteindre le cahier des charges de la sacherie en allongement à la rupture. L'augmentation du taux de PLA permet d'obtenir un meilleur allongement à la rupture dans le sens transversal.

Les films 6 et 7 comportant les compositions décrites dans l'invention avec 35% de PLA et 1% de PPGDGE dans la composition du film 6 et 35% de PLA, 2% de CaCO3 et 1% de PPGDGE dans la composition du film 7 permettent d'atteindre le cahier des charges de la sacherie en allongement à la rupture. L'ajout de CaCO3 dans la formulation permet d'obtenir un meilleur allongement à la rupture dans le sens transversal et d'améliorer la résistance à la déchirure dans le sens longitudinal.

Les caractéristiques de module élastique et de contrainte maximale des films sont données dans le tableau 14.

**[Tableaux 141**

| Film | Direction du test | Module élastique (MPa) | Contrainte maximale (MPa) |
|---|---|---|---|
| Film 5 | MD | 1086 | 32 |
| | TD | 261 | 14,8 |
| Film 6 | MD | 1361 | 29 |
| | TD | 442 | 22 |
| Film 7 | MD | 1324 | 27 |
| | TD | 377 | 26 |

On rappelle que le cahier des charges de la sacherie exige que les films atteignent les valeurs suivantes :
Module élastique : 700 MPa en Sens Longitudinal
210 MPa en Sens Transversal
Contrainte maximale : 20 MPa en Sens Longitudinal
13 MPa en Sens Transversal

Tous les films issus de l'invention présentent des propriétés de module élastique et de contrainte maximale demandées par le cahier des charges.

Les films 5 et 6 comportant les compositions décrites dans l'invention avec 30% de PLA et 1% de PPGDGE dans la composition du film 5 et 35% de PLA et 1% de PPGDGE dans la composition du film 6 permettent d'atteindre le cahier des charges de la sacherie. L'augmentation du taux de PLA améliore le module élastique ainsi que la contrainte maximale.

Les films 6 et 7 comportant les compositions décrites dans l'invention avec 35% de PLA et 1% de PPGDGE dans la composition du film 6 et 35% de PLA, 2% de CaCO3 et 1% de PPGDGE dans la composition du film 7 permettent d'atteindre le cahier des charges de la sacherie. L'ajout de CaCO3 dans la formulation permet d'obtenir de meilleures propriétés dans le sens transversal.

### Exemple 4 :

### Production des compounds

Les granulés ont été produits sur bi-vis co-rotative Clextral Evolum 25 HT. Pour introduire les polymères (PLA Ingeo 4043D de Natureworks et PBAT A400 de Kingfa) un doseur gravimétrique a été utilisé et pour doser le PPGDGE liquide de référence DER^{™} 732P EPOXY RESIN et commercialisé par Olin, une pompe PCM a été utilisée.

Le mélange PLA et PBAT a été introduit via un doseur en début de vis en présence du PPGDGE et du plastifiant TBAC. Le mélange est fondu et amené dans la zone de granulation.

Les granulés ont été préparés dans les mêmes conditions, avec une vitesse de vis de 650 tpm et à un débit de 40 kg/h.

Les paramètres utilisés pour l'extrusion des granulés sont présentés dans le tableau 15.

**[Tableau 15]**

| Zone | Z1 | Z2 | Z3 | Z4 | Z5 | Z6 | Z7 | Z8 | Z9 | Z10 | Z11 |
|---|---|---|---|---|---|---|---|---|---|---|---|
| Température | 50 | 195 | 195 | 195 | 195 | 195 | 200 | 200 | 200 | 200 | 200 |

On prépare deux compositions, une composition 8 selon l'invention comprenant 35% de PLA, 64% de PBAT, et 1% de PPGDGE ainsi qu'une une composition 9 selon l'invention comprenant 35% de PLA, 61,35% de PBAT, 2,5% de TBAC et 1,15% de PPGDGE (% en poids par rapport au poids total de la composition).

### Production du film avec les compositions décrites dans A)

Les compositions 1 à 4 préparées dans A) ont été utilisées pour la préparation de films. Pour l'extrusion gonflage, une ligne de laboratoire Labtech LF-250, laize 20mm, vis de 30 L/D type LBE20-30/C a été utilisée. La vitesse de vis était de 60 tpm. Le taux de gonflage était d'environ 5.

Les réglages des températures d'extrusion gonflage sont détaillées dans le tableau 16.

**[Tableaux 16]**

| Zone | Z1 | Z2 | Z3 | Z4 | Filière #1 | Filière #2 |
|---|---|---|---|---|---|---|
| Température (°C) | 160 | 160 | 160 | 160 | 155 | 160 |

Les films 8 et 9 de composition 8 et 9 ont une épaisseur moyenne de 15,5 µm. Les épaisseurs ont été mesurées avec un micromètre.

Ces films sont transparents, sans rugosité et aucun défaut passant n'a été identifié. Pour chaque gonflage, la bulle était stable.

### Caractérisation des propriétés mécaniques en traction simple et en déchirement.

Les films ont ensuite été caractérisés mécaniquement en traction simple et en déchirure à l'aide d'une machine d'essai Lloyd LS5 équipé d'un capteur de 20 N et en utilisant les normes EN ISO 527-3 et EN ISO 6383-1 respectivement. Les conditions expérimentales par type d'essai sont résumées dans le tableau 17.

**[Tableaux 17]**

| **Test** | **Dimensions de l'échantillon (mm*mm)** | **Ecartement entre mâchoires (mm)** | **Vitesse de la traverse (mm/min)** |
|---|---|---|---|
| Traction simple | 15*150 | 80 | 100 |
| Déchirement | 50*150 | 75 | 200 |

Les propriétés discriminantes du film pour répondre au cahier des charges de la sacherie sont l'allongement à la rupture et la résistance à la déchirure.

Les caractéristiques d'allongement à la rupture et de déchirement de la composition sont données dans le tableau 18.

**[Tableaux 18]**

| Film | Direction du test | Allongement à la rupture (%) | Résistance à la déchirure (N/mm) |
|---|---|---|---|
| Film 8 | MD | 147 | 13,6 |
| | TD | 272 | 15,7 |
| Film 9 | MD | 198 | 15,4 |
| | TD | 191 | 18,2 |

On rappelle que le cahier des charges de la sacherie demande que les films atteignent les valeurs suivantes :
L'allongement à la rupture, qui mesure la capacité d'un matériau à s'allonger sous charge avant sa rupture :
120 % en Sens Longitudinal
180 % en Sens Transversal

### Résistance à la déchirure :

Equivalente ou supérieure aux valeurs obtenues pour le film de référence (film 1) soit 18 N/mm dans le sens longitudinal et 20 N/mm dans le sens transversal selon les conditions de la norme DIN EN ISO 6383-1 à 200 mm/min.

Les films 8 et 9 comportant les compositions décrites dans l'invention avec 1% de PPGDGE dans la composition du film 8 et 1,15% de PPGDGE + 2,5% de TBAC dans la composition du film 9 permettent d'atteindre le cahier des charges de la sacherie en allongement à la rupture. L'ajout de plastifiant permet d'améliorer les propriétés en allongement à la rupture ainsi que la résistance à la déchirure des films.

Les caractéristiques de module élastique et de contrainte maximale des films sont données dans le tableau 19.

**[Tableaux 19**

| Film | Direction du test | Module élastique (MPa) | Contrainte maximale (MPa) |
|---|---|---|---|
| Film 5 | MD | 1361 | 29 |
| | TD | 442 | 22 |
| Film 6 | MD | 1330 | 29,4 |
| | TD | 314 | 14,2 |

On rappelle que le cahier des charges de la sacherie exige que les films atteignent les valeurs suivantes :
Module élastique : 700 MPa en Sens Longitudinal; 210 MPa en Sens Transversal
Contrainte maximale : 20 MPa en Sens Longitudinal ; 13 MPa en Sens Transversal
Tous les films issus de l'invention présentent des propriétés de module élastique et de contrainte maximale demandées par le cahier des charges.

## Revendications

1. Composition de matière plastique qui comprend
a. au moins 20% en poids de PLA (acide polylactique),
b. au moins 45 % en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges,
c. du Poly (Propylene Glycol) DiGlycidyl Éther (PPGDGE) compatibilisant PLA/Polyester, et éventuellement
d. un plastifiant.

2. Composition selon la revendication 1, **caractérisée en ce que** le polyester b) est du PBAT.

3. Composition selon l'une des revendications 1 à 2, **caractérisée en ce que** la composition selon l'invention comprend au moins 25 % de PLA.

4. Composition selon l'une des revendications 1 à 3, **caractérisée en ce que** la teneur en polyester b) est d'au moins 50% du poids total de la composition.

5. Composition selon l'une des revendications 1 à 4, **caractérisée en ce que** la teneur en compatibilisant c) est de 0,5 à 2% en poids par rapport au poids total de la composition.

6. Composition selon l'une des revendications 1 à 5, **caractérisée en ce qu'**elle comprend en outre des enzymes dégradant les polyesters.

7. Film plastique, en particulier film monocouche, de composition telle que définie selon l'une des revendications 1 à 6.

8. Procédé de préparation de compositions selon l'une des revendications 1 à 7, **caractérisé en ce qu'**il comprend les étapes de
1. mélanger le PLA a) et le compatibilisant Poly (Propylene Glycol) DiGlycidyl Éther (PPGDGE) c) à une température où le PLA est partiellement ou totalement fondu, puis
2. ajouter du polyester b) choisi parmi le PBAT (polybutylène adipate téréphthalate), les PHAs (polyhydroxyalkanoates), le PBS (polybutylène succinate), le PBSA (polybutylène succinate adipate) et leurs mélanges à une température où le mélange préalablement obtenu est fondu.

## Patentansprüche

1. Zusammensetzung eines Kunststoffes, die umfasst:
a. mindestens 20 Gew.-% PLA (Polylactid),
b. mindestens 45 Gew.-% eines Polyesters ausgewählt aus dem PBAT (Polybutylen(adipat-co-terephthalat)), den PHAs (Polyhydroxyalkanoate), dem PBS (Polybutylensuccinat), dem PBSA (Polybutylensuccinat-Adipat), und Gemischen davon,
c. Diglycidylether (PPGDGE) eines Poly (Propylenglykol), der PLA/Polyester compatibilisiert, und gegebenenfalls,
d. einen Weichmacher.

2. Zusammensetzung nach Anspruch 1, **dadurch gekennzeichnet, dass** der Polyester b) PBAT ist.

3. Zusammensetzung nach einem der Ansprüche 1 bis 2, **dadurch gekennzeichnet, dass** die Zusammensetzung gemäß der Erfindung mindestens 25 % PLA umfasst.

4. Zusammensetzung nach einem der Ansprüche 1 bis 3, **dadurch gekennzeichnet, dass** der Polyestergehalt b) mindestens 50 % des Gesamtgewichts der Zusammensetzung beträgt.

5. Zusammensetzung nach einem der Ansprüche 1 bis 4, **dadurch gekennzeichnet, dass** der Compatibilisatorgehalt c) 0,5 bis 2 Gew.-% des Gesamtgewichts der Zusammensetzung beträgt.

6. Zusammensetzung nach einem der Ansprüche 1 bis 5, **dadurch gekennzeichnet, dass** sie ferner Enzyme umfasst, die die Polyester abbauen.

7. Kunststofffolie, insbesondere Einschichtfolie, mit einer Zusammensetzung nach einem der Ansprüche 1 bis 6.

8. Verfahren zur Zubereitung von Zusammensetzungen nach einem der Ansprüche 1 bis 7, **dadurch gekennzeichnet, dass** es die Schritte umfasst:
1. Mischen des PLA a) und des Compatibilisators Diglycidylether (PPGDGE) eines Poly (Propylenglykol) c) bei einer Temperatur, bei der das PLA teilweise oder vollständig geschmolzen ist, dann
2. Hinzufügen von Polyester b), ausgewählt aus dem PBAT (Polybutylen(adipat-co-terephthalat)), den PHAs (Polyhydroxyalkanoate), dem PBS (Polybutylensuccinat), dem PBSA (Polybutylensuccinat-Adipat), und Gemischen davon, bei einer Temperatur, bei der das zuvor erhaltene Gemisch geschmolzen ist.

## Claims

1. Plastic composition which comprises
a. at least 20% by weight of PLA (polylactic acid),
b. at least 45% by weight of a polyester selected from PBAT (polybutylene adipate terephthalate), PHAs (polyhydroxyalkanoates), PBS (polybutylene succinate), PBSA (polybutylene succinate adipate) and mixtures thereof,
c. Poly (Propylene Glycol) DiGlycidyl Ether (PPGDGE) compatibilizer PLA/Polyester, and optionally
d. a plasticizer.

2. Composition according to claim 1, **characterized in that** the polyester b) is PBAT.

3. Composition according to one of claims 1 to 2, **characterized in that** the composition according to the invention comprises at least 25% PLA.

4. Composition according to one of claims 1 to 3, **characterized in that** the polyester content b) is at least 50% of the total weight of the composition.

5. Composition according to one of claims 1 to 4, **characterized in that** the content of compatibilizer c) is 0.5 to 2% by weight relative to the total weight of the composition.

6. Composition according to one of claims 1 to 5, **characterized in that** it also comprises enzymes which degrade polyesters.

7. Plastic film, in particular single-layer film, of composition as defined according to one of claims 1 to 6.

8. Process for the preparation of compositions according to one of claims 1 to 7, **characterized in that** it comprises the steps of
1. mixing the PLA a) and the compatibilizer Poly (Propylene Glycol) DiGlycidyl Ether (PPGDGE) c) at a temperature where the PLA is partially or completely melted, then
2. add polyester b) chosen from PBAT (polybutylene adipate terephthalate), PHAs (polyhydroxyalkanoates), PBS (polybutylene succinate), PBSA (polybutylene succinate adipate) and their mixtures at a temperature where the previously obtained mixture is melted.
